# EUROPÄISCHE PATENTSCHRIFT

(11) **EP 3 055 234 B1**
(45) Veröffentlichungstag und Bekanntmachung des Hinweises auf die Patenterteilung: **29.11.2017**
(21) Anmeldenummer: 14805774.8
(22) Anmeldetag: 10.10.2014
(51) Int. Cl.: B65G 39/12

(54) **SCHWENKLAGER UND FÖRDERROLLE FÜR EINEN SCHRÄGEN EINBAU DERSELBEN IN EINE FÖRDERANLAGE**
PIVOT BEARING AND CONVEYING ROLLER FOR AN OBLIQUE MOUNTING OF THE SAME IN A CONVEYOR SYSTEM
PALIER PIVOTANT ET ROULEAU DE TRANSPORT POUR UN MONTAGE INCLINÉ DE CE DERNIER DANS UNE INSTALLATION DE TRANSPORT

(30) Priorität: 11.10.2013 AT 506552013
(43) Veröffentlichungstag der Anmeldung: 17.08.2016
(73) Patentinhaber: TGW Mechanics GmbH, 4600 Wels (AT)
(72) Erfinder: REISCHL, Josef, A-4623 Gunskirchen (AT)
(74) Vertreter: Burger, Hannes
(86) Internationale Anmeldenummer: PCT/AT2014/050241
(87) Internationale Veröffentlichungsnummer: WO 2015/051391

(56) Entgegenhaltungen:
- EP-A1- 1 222 125
- EP-A2- 1 285 869
- JP-A- 2010 235 292
- JP-U- S 528 882
- US-A- 4 241 825

## Beschreibung

Die Erfindung betrifft eine Anordnung nach dem Oberbegriff des Anspruchs 1 und eine Förderanlage nach dem Oberbegriff des Anspruchs 10 zum Transport von Objekten, insbesondere von Ladehilfsmittel, wie Behältern, Tablaren, mittels Förderrollen in mehreren Förderabschnitten. Eine Förderrolle für einen schrägen Einbau derselben in eine Förderanlage ist grundsätzlich bekannt. In einer Förderanlage wird normalerweise eine Vielzahl solcher Förderrollen verbaut, von denen zumindest einige motorisch angetrieben sind und so für den Vortrieb der auf der Förderanlage zu transportierenden Objekte sorgen. In der Regel sind die Rollenachsen normal zur Hauptförderrichtung ausgerichtet. Bei Spezialanwendungen kann es allerdings erforderlich sein, die Rollenachsen schräg zur Förderrichtung auszurichten, beispielsweise wenn die beförderten Objekte an einem entlang der Förderanlage seitlich angeordneten Anschlag respektive an einer entlang der Förderanlage seitlich angeordneten Führung ausgerichtet werden sollen. Die schräg gestellten Förderrollen bewegen die beförderten Objekte an den genannten Anschlag beziehungsweise die genannte Führung, der Anschlag/die Führung sorgen aber dafür, dass die Objekte nicht von der Förderanlage herunter fallen sondern weiterhin in der Hauptförderrichtung weitertransportiert werden.
In herkömmlichen Förderanlagen gestaltet sich der Aufbau solcher Förderabschnitte mit schräg gestellten Förderrollen vergleichsweise schwierig, da dort spezielle Förderrollen und/oder Rahmenprofile zum Einsatz kommen, die sich insbesondere in der Länge von den Förderrollen, die für den geraden Einbau vorgesehen sind, unterscheiden. Ein nachträgliches Umrüsten einer bestehenden Förderanlage auf schräg gestellte Förderrollen oder ein Rückbau auf gerade Förderrollen gestaltet sich daher schwierig. Zumindest müssen die betreffenden Rollen und/oder Rahmenprofile beschafft werden oder unterschiedliche Rollen/Rahmenprofile auf Lager gehalten werden.
Ein weiterer Nachteil der bekannten Lösungen besteht auch darin, dass die Schwenklager nach dem Stand der Technik nicht flexibel einsetzbar sind. Häufig weisen diese eine vorgegebene Schrägstellung der Achsaufnahme für die Förderrolle auf oder sind vergleichsweise fragil aufgebaut. Beispielsweise offenbart die EP 1 222 125 B1 dazu ein Beispiel, welches mit mehreren Stiften gelagert ist. Spiel in den Lagerungen kann aber zu unerwünschten Schwingungsphänomenen im Antriebsstrang führen.

Aus der JP 2010/235292 A1 ist eine Anordnung nach dem Oberbegriff des Anspruchs 1, eine Förderanlage nach dem Oberbegriff des Anspruchs 10 und eine Förderrolle bekannt, welche eine feststehende Achse und einen um diese Achse drehbar gelagerten Rollenkörper umfasst, wobei ein erstes Ende der Achse in dem über den Rollenkörper ragenden Teil einen ersten Absatz zwischen einem rollenseitig liegenden ersten Abschnitt mit einem größeren ersten Querschnitt und einem relativ zum ersten Absatz gegenüber liegenden zweiten Abschnitt mit einem kleineren zweiten Querschnitt und das zweite Ende der Achse in dem über den Rollenkörper ragenden Teil einen dritten Abschnitt mit einem dritten Querschnitt aufweist. Diese Förderrolle kann in einer Förderanlage zum Transport von Objekten zwischen einem ersten Rahmenprofil und zweiten Rahmenprofil angeordnet werden. Dabei wird das erste Ende der Achse mit ihrem zweiten Abschnitt über eine Lagervorrichtung am ersten Rahmenprofil und das zweite Ende der Achse mit ihrem dritten Abschnitt über eine Lagervorrichtung am zweiten Rahmenprofil gehalten. Die EP 1 285 869 A2 offenbart ebenfalls eine Förderrolle mit einer feststehenden Achse und einem um diese Achse drehbar gelagerten Rollenkörper, wobei ein erstes Ende der Achse einen ersten Abschnitt mit einem größeren ersten Querschnitt und einen kleineren zweiten Querschnitt und das zweite Ende der Achse in dem über den Rollenkörper ragenden Teil einen dritten Abschnitt mit einem dritten Querschnitt aufweist. Diese Förderrolle kann in einer Förderanlage zum Transport von Objekten zwischen einem ersten Rahmenprofil und zweiten Rahmenprofil angeordnet werden. Dabei wird das erste Ende der Achse mit ihrem ersten Abschnitt über eine Lagerplatte am ersten Rahmenprofil und das zweite Ende der Achse mit ihrem dritten Abschnitt über eine Lagervorrichtung am zweiten Rahmenprofil gehalten. Die Lagerplatte stützt sich mit an dieser an den Ecken vorragenden Zähnen am Rahmenprofil ab. Die JPS 52 8882 U offenbart eine Förderrolle, welche einen Rollenkörper und am ersten Ende einen ersten Achsabschnitt und am zweiten Ende einen zweiten Achsabschnitt umfasst, wobei der zweite Achsabschnitt gegenüber dem ersten Achsabschnitt axial verschiebbar im Rollenkörper gelagert ist.
Die US 4,241,825 A offenbart eine Förderanlage zum Transport von Objekten, bei der Förderrollen zwischen einem ersten Rahmenprofil und zweiten Rahmenprofil schräg angeordnet sind. Die Förderrolle umfasst eine feststehenden Achse und einen um diese Achse drehbar gelagerten Rollenkörper, wobei die Förderrollen jeweils mit ihrem ersten Ende der Achse über einen Lagerblock am ersten Rahmenprofil und das zweite Ende der Achse über einen Lagerblock am zweiten Rahmenprofil gehalten sind.
Eine Aufgabe der Erfindung ist es daher, eine verbesserte Anordnung für eine Förderrolle und eine verbesserte Förderanlage anzugeben. Insbesondere soll der Einsatz der betreffenden Komponenten flexibilisiert werden. Das bedeutet im Speziellen, dass ein und dieselbe Förderrolle für den geraden und den schrägen Einbau geeignet und auch das Schwenklager flexibel einsetzbar sein soll. Letzteres soll auch eine nach Möglichkeit starre Lagerung der Förderrolle bewirken.

Die Aufgabe der Erfindung wird mit einer Anordnung nach Anspruch 1 gelöst, bei der
- das Schwenklager eine um die Schwenkachse des Schwenklagers schwenkbare und normal auf dieselbe ausgerichtete allgemein zylindrische Ausnehmung aufweist, welche mit dem zweiten Abschnitt der Achse korrespondiert,
- der Abstand (a) zwischen dem ersten und zweiten Rahmenprofil derart bemessen ist, dass der erste Abschnitt und der dritte Abschnitt der Achse bei geradem Einbau der Förderrolle in direkt gegenüberliegende erste und zweite Ausnehmungen der Rahmenprofile zu liegen kommen und
- der Längsabstand (b) der ersten beziehungsweise zweiten Ausnehmungen derart bemessen ist, dass der erste Abschnitt der Achse bei schrägem Einbau der Förderrolle in einer ersten Ausnehmung des ersten Rahmenprofils, der zweite Abschnitt der Achse in der zylindrischen Ausnehmung des bei der ersten Ausnehmung außen am ersten Rahmenprofil montierten Schwenklagers und der dritte Abschnitt der Achse in einer der ersten Ausnehmung schräg gegenüberliegenden zweiten Ausnehmung im zweiten Rahmenprofil zu liegen kommen.
Es sind also die Länge der Förderrolle respektive die Abstände zwischen erstem und drittem sowie zwischen zweitem und drittem Abschnitt mit dem Abstand der beiden Rahmenprofile sowie dem Abstand der in diesen angeordneten Ausnehmungen abgestimmt. Die Förderrolle kann somit gerade zwischen den Rahmenprofilen platziert als auch schräg zwischen diesen eingebaut werden.

Wird die Förderrolle gerade eingebaut, so kommen der erste und der dritte Abschnitt in den Ausnehmungen der Rahmenprofile zu liegen, der zweite Abschnitt ragt dementsprechend über das erste Rahmenprofil hinaus. Ist dieser mit einem Gewinde ausgestattet, so kann die Förderrolle beispielsweise mit dem ersten Rahmenprofil verschraubt werden. Dabei kann eine spezielle Mutter zum Einsatz kommen, welche ein Hervorragen des ersten Abschnitts aus dem Rahmenprofil ermöglicht. Die Mutter weist zu diesem Zweck einen dem Rahmenprofil zugewandten Hohlraum (z.B. eine zylindrische Bohrung) auf, in dem der erste Abschnitt aufgenommen wird. Der Hohlraum kann somit als zylinderförmige und dem Gewinde der Mutter vorgelagerte Ausnehmung ausgeführt sein.

Insbesondere wenn der Unterschied der Querschnitte des ersten und des vierten Abschnitts nur gering und damit der erste Absatz beziehungsweise Bund zwischen diesen beiden Abschnitten nur klein ist, kann zwischen diesem ersten Absatz/Bund und dem Rahmenprofil auch eine Unterlegscheibe vorgesehen sein. Diese ist bevorzugt relativ großflächig und aus Stahl gefertigt. Damit wird einem Ausreißen der Ausnehmung im Rahmenprofil, das üblicherweise aus Aluminium gefertigt wird, vorgebeugt.

Wird die Förderrolle schräg eingebaut, so wird der zweite Abschnitt in eine entsprechende Ausnehmung im Schwenklager eingesetzt, das außen am ersten Rahmenprofil im Bereich einer ersten Ausnehmung montiert ist. Die erste und die zweite verwendete Ausnehmung liegen dann einander nicht mehr direkt gegenüber, sondern sind gegeneinander etwas schräg versetzt. Dadurch, dass der zweite Abschnitt, welcher beim schrägen Einbau in das Schwenklager eingesetzt wird, etwas weiter außen liegt als der erste Abschnitt, kann der für den schrägen Einbau erforderliche Längenausgleich gut erfolgen.

Durch einen verschiebbar und insbesondere federnd gelagerten dritten Abschnitt und/oder durch Weglassen einer für den geraden Einbau vorgesehenen Unterlegscheibe kann ein Längenausgleich bei schrägem Einbau der Förderrolle, insbesondere einer motorisierten Förderrolle, ebenfalls unterstützt beziehungsweise bewirkt werden. Um den schrägen Einbau der Förderrolle zu ermöglichen beziehungsweise um ein Verklemmen der Verbindung zwischen Förderrolle und den Rahmenprofilen zu vermeiden, sollte ein ausreichendes Spiel zwischen den Ausnehmungen in den Rahmenprofilen und dem ersten und dritten Abschnitt vorgesehen werden.

Günstig ist es, wenn die erste Ausnehmung sechskantförmig ist und der erste Abschnitt formschlüssig in die sechseckige Ausnehmung des ersten Rahmenprofils einsteckbar und der zweite Abschnitt zylinderförmig ist. Dadurch können die Förderrollen mit ihrem ersten Achsende unverdrehbar in ein erstes Rahmenprofil einer Förderanlage eingesetzt werden, die erste sechseckige Ausnehmungen aufweisen.

Vorteilhaft ist es, wenn der erste Abschnitt der Förderrolle eine Vierkantform oder eine vierarmige Sternform aufweist. Auf diese Weise kann auch dann noch ein guter Formschluss zwischen dem ersten Abschnitt und einer ersten sechseckigen Ausnehmung hergestellt werden, wenn der Umkreis/Inkreis der Vierkantform oder Sternform kleiner ist als der Umkreis/Inkreis der ersten sechseckigen Ausnehmung.

Günstig ist es weiterhin, wenn der zweite Abschnitt der Förderrolle ein Gewinde aufweist. Dadurch kann die Förderrolle mit einer Mutter in der Förderanlage fixiert werden.

Vorteilhaft ist es zudem, wenn die zweite Ausnehmung sechskantförmig ist und der dritte Abschnitt formschlüssig in die zweite sechseckige Ausnehmung des zweiten Rahmenprofils einsteckbar ist. Dadurch können die Förderrollen auch mit ihrem zweiten Achsende unverdrehbar in ein zweites Rahmenprofil einer Förderanlage eingesetzt werden, die zweite sechseckige Ausnehmungen aufweisen.

Als besonders vorteilhaft hat es sich erwiesen, wenn die erste / zweite sechseckige Ausnehmung mit einer Schlüsselweite SW=11 mm ausgeführt ist, da diese Größe einem Quasi-Standard für Förderanlagen entspricht.

Besonders vorteilhaft ist es in diesem Zusammenhang, wenn der dritte Abschnitt gegenüber dem ersten und zweiten Abschnitt axial verschiebbar, insbesondere federnd, gelagert ist. Auf diese Weise ist es möglich, die Förderrolle zuerst mit dem ersten beziehungsweise zweiten Abschnitt in eine erste Ausnehmung in einem ersten Rahmenprofil einer Förderanlage einzusetzen und danach durch Eindrücken des dritten Abschnitts in eine zweite Ausnehmung in einem zweiten Rahmenprofil einzusetzen. Die Förderrolle kann somit im Prinzip werkzeuglos in eine Förderanlage eingebaut respektive aus dieser wieder ausgebaut werden. Selbstverständlich kann diese Förderrolle auch noch zusätzlich fixiert werden, beispielsweise mit Schrauben.
Besonders vorteilhaft ist es auch, wenn die Förderrolle einen dem ersten Abschnitt rollenseitig benachbart gelegenen vierten Abschnitt mit kreisförmigem Querschnitt umfasst, der kleiner ist als der Umkreis des genannten Sechskants. Dadurch wird der zylindrische, im Wesentlichen im Inneren des Rollenkörpers liegende, Abschnitt der Rollenachse, auf dem zum Beispiel ein Wälzlager, ein Stator eines Elektromotors, eine Buchse und dergleichen angeordnet werden können, vergleichsweise dünn gehalten. Der Materialabtrag zur Herstellung des ersten bis dritten Abschnitts ausgehend von einem Stangenmaterial fällt daher gering aus. Die Bearbeitungszeit fällt damit kurz aus, die Standzeit der Bearbeitungswerkzeuge dagegen lang. Als besonders vorteilhaft hat es sich in diesem Zusammenhang erwiesen, wenn der vierte Abschnitt einen Durchmesser von 12 mm aufweist.

Schließlich wird die Aufgabe der Erfindung auch durch eine Förderanlage nach Anspruch 10 gelöst, bei der
im ersten Förderabschnitt, in welchem die Förderrollen mit ihren Achsen im Wesentlichen normal zum Profilsteg zwischen dem ersten und zweiten Rahmenprofil angeordnet sind, der erste Abschnitt der motorisierten Förderrolle direkt in die erste Ausnehmung und der dritte Abschnitt der motorisierten Förderrolle direkt in die zweite Ausnehmung eingesetzt ist, und
im zweiten Förderabschnitt, in welchem die Förderrollen mit ihren Achsen winkelig zum Profilsteg zwischen dem ersten und zweiten Rahmenprofil angeordnet sind, der zweite Abschnitt der motorisierten Förderrolle mit der allgemein zylindrisch ausgebildeten Ausnehmung in der Schwenkplatte des Schwenklagers korrespondiert.
Auf diese Weise kann die Förderrolle mit ihrem ersten Achsende in ein flexibel einstellbares Schwenklager eingesetzt werden, wodurch eine Schrägstellung der Förderrolle in nahezu beliebigen Winkellagen (insbesondere -10° bis 0° und 0° bis 10°) ermöglicht wird, im Speziellen stufenlos. Beim Schwenklager wird diese Schrägstellung durch die Schwenkplatte ermöglicht. Vorteilhaft kann so ein und dasselbe Schwenklager für verschiedene Schrägstellungen einer Förderrolle eingesetzt werden, wodurch die Lagerhaltung für den Aufbau, Umbau und Betrieb einer Förderanlage stark vereinfacht wird.

Durch die vorgeschlagenen Maßnahmen kann zudem ein Drehmoment zwischen Förderrolle und Schwenklager gut übertragen werden, und die Förderrolle ist auch bei schrägem Einbau in die Förderanlage vergleichsweise starr fixiert. Schwingungsphänomene, die unter Umständen durch eine Motorregelung für die Förderrolle verursacht oder verstärkt werden könnten, werden dadurch wirksam vermieden oder treten zumindest nur in abgeschwächter Form auf.

Durch die beiden Abschnitte auf dem Achsende kann die Förderrolle flexibel eingesetzt werden, indem der erste Absatz zwischen erstem und zweitem Abschnitt für den schrägen Einbau und der zweite Absatz am ersten Abschnitt für den geraden Einbau der Förderrolle vorgesehen ist. Vorteilhaft kann so ein und dieselbe Förderrolle für verschiedene Einbaulagen eingesetzt werden, wodurch die Lagerhaltung für den Aufbau, Umbau und Betrieb einer Förderanlage ebenfalls stark vereinfacht wird. Insbesondere kann die Förderrolle auch einen innenliegenden Motor zum Antrieb des Rollenkörpers aufweisen, sodass Objekte (z.B. Behälter, Tablare, Kartonagen, etc.) auch auf Anlagenabschnitten mit schräg gestellten Förderrollen aktiv weiterbefördert werden können.

Günstig ist es bei der Förderanlage, wenn
- die normal auf die Schwenkachse stehenden Führungsflächen mit ebenfalls normal auf die Schwenkachse stehenden Führungsflächen im Grundkörper korrespondieren und
- ein auf die Schwenkplatte um die Achse der Förderrolle wirkendes Drehmoment von den sich berührenden Führungsflächen der Schwenkplatte und den Führungsflächen des Grundkörpers aufgenommen wird.

In diesem Fall berühren die Führungsflächen der Schwenkplatte die Führungsflächen des Grundkörpers bereits im unbelasteten Zustand, das heißt ohne Aufbringen eines Drehmoments auf die Schwenkplatte. Ein Drehmoment zwischen Förderrolle und Schwenklager wird daher über die Führungsflächen der Schwenkplatte und die Führungsflächen des Grundkörpers übertragen. Die Lagerung der Förderrolle ist somit besonders starr. Schwingungsphänomene, die unter Umständen durch eine Motorregelung für die Förderrolle verursacht oder verstärkt werden könnten, werden dadurch noch wirksamer vermieden oder treten zumindest nur noch sehr abgeschwächt auf. Durch die vorgeschlagenen Maßnahmen kann das Drehlager der Schwenkplatte auch relativ "fragil" (dünnwandig) ausgeführt werden, wodurch sich für das Schwenklager insgesamt ein vergleichsweise kompakter Aufbau ergibt, ohne dass darunter die Stabilität leidet. Das Drehlager kann in diesem Fall auch ein Lagerspiel aufweisen und kann somit einfach hergestellt werden.

Günstig ist es bei der Förderanlage weiterhin, wenn
- die Schwenkplatte zumindest einen normal aus der Führungsfläche herausragenden zylindrischen Drehzapfen aufweist und
- der Grundkörper mehrteilig ausgeführt ist, wobei in einem ersten Teil eine erste Lagerung für die Aufnahme des genannten Drehzapfens angeordnet ist oder in einem ersten Teil eine erste Halbschale und in einem zweiten Teil eine zweite Halbschale für die Aufnahme des genannten Drehzapfens angeordnet ist.

Dadurch ergibt sich ein vergleichsweise kompakter Aufbau des Schwenklagers. Dies kann durch einfaches Zusammenfügen der Teile des Grundkörpers montiert werden. Durch den Drehzapfen ergibt sich zudem eine gute Schwenklagerung der Schwenkplatte. Die Drehzapfenaufnahme muss natürlich nicht durch zwei Halbschalen gebildet sein, sondern es kann auch eine andere (Lager)aufnahme eingesetzt werden.

Wird eine Teilungsebene des Grundkörpers durch die Lagerbohrung für die Aufnahme des genannten Drehzapfen so gelegt, dass in jedem der Teile eine Halbschale entsteht, kann durch entsprechende Auslegung/Dimensionierung des Drehzapfens und der Halbschalen die Schwenkplatte über die Drehzapfen/Halbschalenanordnung "spielfrei" im Grundkörper gehalten bzw. gelagert werden. Ein auf die Schwenkplatte um die Achse der Ausnehmung wirkendes Drehmoment kann in diesem Fall über die Drehzapfen/Halbschalenanordnung aufgenommen werden. Sollten im laufenden Betrieb der Förderanlage an der Drehzapfen/Halbschalenanordnung Verschleißerscheinungen auftreten, so wäre es aber möglich, dass auch bei dieser Ausführung ein auf die Schwenkplatte um die Achse der Ausnehmung wirkendes Drehmoment über die Führungsflächen der Schwenkplatte und Führungsflächen des Grundkörpers aufgenommen wird.

Besonders günstig ist es, wenn die Schwenkplatte zwei Drehzapfen der genannten Art aufweist, die in zwei Lagerungen oder je zwei Halbschalen gelagert sind. Auf diese Weise wird die Schwenkplatte noch besser drehbar gelagert.

Günstig ist es, wenn die Schwenkplatte im Wesentlichen quaderförmig ist. Auf diese Weise kann die Schwenkplatte einfach hergestellt werden, beispielsweise in dem diese von einem Flachmaterial abgelängt und mit einer Ausnehmung für das Achsende einer Förderrolle sowie gegebenenfalls mit zumindest einem Drehzapfen respektive zumindest einer Bohrung für einen Drehbolzen ausgestattet wird. Die Drehzapfen können beispielsweise in Bohrungen in der Schwenkplatte eingesetzt sein.

Zum besseren Verständnis der Erfindung wird diese anhand der nachfolgenden Figuren näher erläutert. Es zeigen
- Fig. 1: eine beispielhafte Förderrolle schräg von vorne gesehen;
- Fig. 2: die Förderrolle aus Fig. 1 schräg von hinten gesehen;
- Fig. 3: eine in ein Rahmenprofil eingebaute Förderrolle in Seitenansicht;
- Fig. 4: eine mit Hilfe eines Schwenklagers zwischen zwei Rahmenprofilen eingebaute Förderrolle in Explosionsdarstellung;
- Fig. 5: einen ersten Ausschnitt einer Förderanlage mit einer gerade zwischen zwei Rahmenprofilen eingebauten Förderrolle in Draufsicht;
- Fig. 6: einen zweiten Ausschnitt der Förderanlage mit einer mit Hilfe eines Schwenklagers schräg zwischen zwei Rahmenprofilen eingebauten Förderrolle in Draufsicht;
- Fig. 7: ein beispielhaftes Schwenklager in Explosionsdarstellung;
- Fig. 8: ein weiteres Beispiel eines Schwenklagers in Explosionsdarstellung und
- Fig. 9: eine schematische Darstellung der Längenunterschiede bei geradem und schrägem Einbau der Förderrolle.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

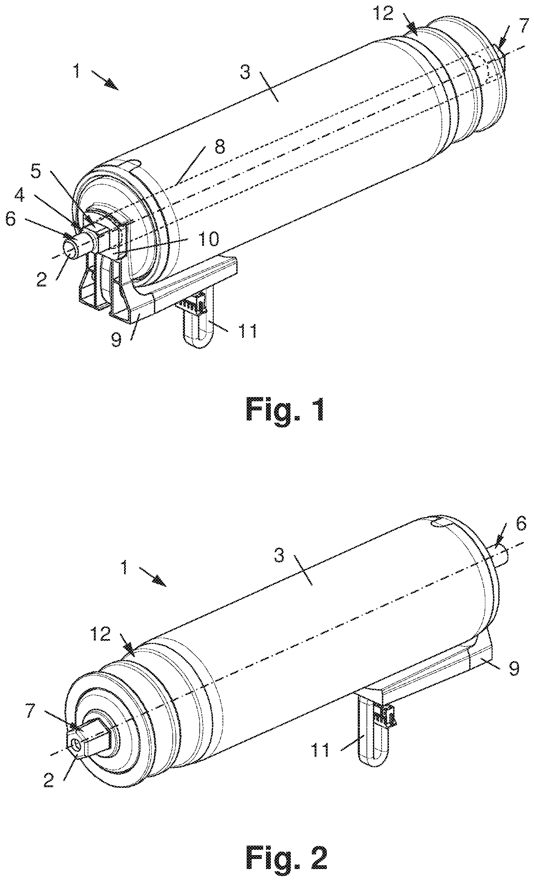

Die Figuren 1 und 2 zeigen eine beispielhafte zylindrische Förderrolle 1 zum Transport von Objekten in Schrägansicht (Fig. 1 von vorne, Fig. 2 von hinten). Die Förderrolle 1 umfasst eine feststehende Achse 2 und einen um diese Achse 2 drehbar gelagerten Rollenkörper 3. Ein erstes Ende der Achse 2 weist in dem über den Rollenkörper 3 ragenden Teil einen ersten Absatz 4 zwischen einem rollenseitig liegenden ersten Abschnitt 5 mit einem größeren ersten Querschnitt und einem davon gegenüber liegenden zweiten Abschnitt 6 mit einem kleineren zweiten Querschnitt auf.

Das zweite Ende der Achse 2 weist in diesem Beispiel in dem über den Rollenkörper 3 ragenden Teil einen dritten Abschnitt 7 mit einem sechskantförmigen dritten Querschnitt auf. In der Fig. 1 ist strichliert ein vierter Abschnitt 8 dargestellt, welcher benachbart zum ersten Abschnitt 5 und in diesem Beispiel auch benachbart zum dritten Abschnitt 7 angeordnet ist. Der vierte Abschnitt 8 bildet den im Wesentlichen innerhalb des Rollenkörpers 3 verlaufenden Teil der Achse 2. Generell kann die Achse 2 wie in Fig. 1 dargestellt durchgehend oder aber auch geteilt sein.

Darüber hinaus umfasst die in den Fig. 1 und 2 dargestellte Förderrolle 1 eine Schutzkappe 9, in der ein Anschlusskabel 11 geführt ist, welches innerhalb des Rollenkörpers 3 mit einem Motor (nicht dargestellt) verbunden ist. Zudem ist in der Fig. 1 eine Unterlegscheibe 10 dargestellt. Schließlich zeigen die Figuren auch Rillen 12 im Rollenkörper 3, in welchen ein Antriebsriemen aufgenommen werden kann, um so die Antriebskraft von einer motorisch angetriebenen Förderrolle 1 auf motorlose Förderrollen zu übertragen.

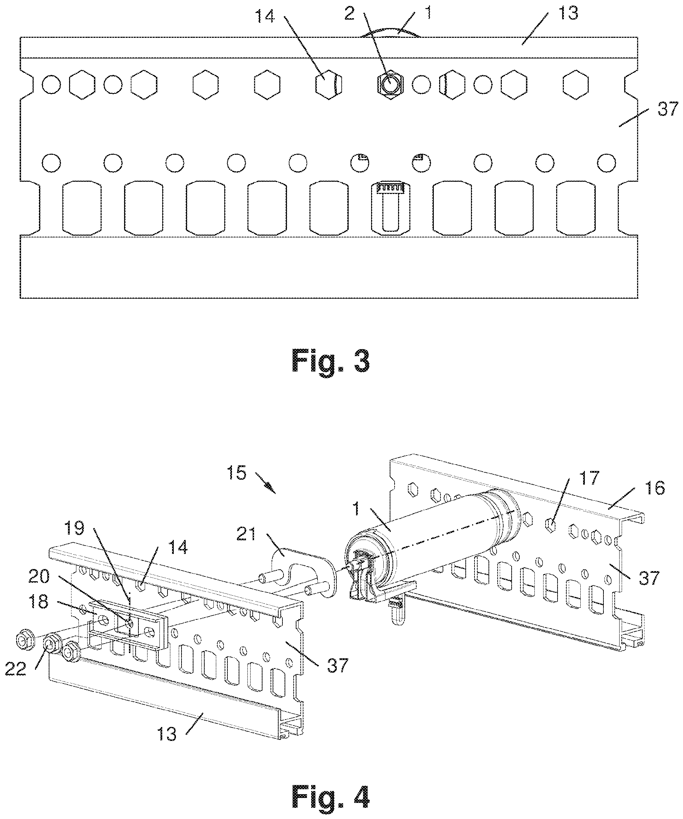

Fig. 3 zeigt ein Rahmenprofil 13 einer Förderanlage zum Transport von Objekten mit einer eingebauten Förderrolle 1 in Seitenansicht. Der erste Abschnitt 5 der Förderrolle 1 ist formschlüssig in eine erste sechseckige Ausnehmung 14 in einem vertikalen Profilsteg 37 des ersten Rahmenprofils 13 eingesteckt. Konkret weist der erste Abschnitt 5 eine Vierkantform auf. Eine alternative Form wäre zum Beispiel eine vierarmige Sternform. Durch die gewählte Form können die Förderrollen 1 mit ihrem ersten Achsende unverdrehbar in das Rahmenprofil 13 eingesetzt werden. Als besonders vorteilhaft hat es sich dabei erwiesen, wenn die erste sechseckige Ausnehmung 14 mit einer Schlüsselweite SW=11 mm ausgeführt ist, da diese Größe einem Quasi-Standard für Förderanlagen entspricht.

Ein weiterer Vorteil der Vierkantform ist, dass der Umkreis/Inkreis der Vierkantform (respektive der vierarmigen Sternform) kleiner ist als der Umkreis/Inkreis der ersten sechseckigen Ausnehmung 14. Der erste Abschnitt 5 der Achse 2 kann daher relativ dünn gestaltet werden. Insbesondere kann die Förderrolle 1 einen vierten Abschnitt 8 mit kreisförmigem Querschnitt aufweisen, der kleiner ist als der Umkreis des genannten Sechskants. Dadurch kann der zylindrische, vorwiegend im Inneren des Rollenkörpers 3 verlaufende, vierte Abschnitt 8 der Rollenachse 2, auf dem zum Beispiel Wälzlager, ein Stator eines Elektromotors, Buchsen und dergleichen angeordnet werden können, vergleichsweise dünn gehalten werden. Der Materialabtrag zur Herstellung des ersten bis dritten Abschnitts 5, 6, 7 ausgehend von einem Stangenmaterial fällt daher gering aus. Die Bearbeitungszeit fällt damit kurz aus, die Standzeit der Bearbeitungswerkzeuge dagegen lang. Als besonders vorteilhaft hat es sich in diesem Zusammenhang erwiesen, wenn der vierte Abschnitt 8 einen Durchmesser von 12 mm aufweist.

Der dritte Abschnitt 7 der Förderrolle 1 weist in diesem Beispiel wie erwähnt einen sechskantförmigen dritten Querschnitt auf, der eine zweite sechseckige Ausnehmung 17 eines zweiten Rahmenprofils 16 formschlüssig eingesteckt werden kann. Als besonders vorteilhaft hat es sich dabei wiederum erwiesen, wenn die zweite sechseckige Ausnehmung für den dritten Abschnitt 7 ebenfalls mit einer Schlüsselweite SW=11 mm ausgeführt ist.

Die Fig. 4 zeigt nun eine Anordnung 15 mit zwei beabstandet verlaufenden Rahmenprofilen 13 und 16 und einer dazwischen eingesteckten Förderrolle 1 in Explosionsdarstellung. Das erste Rahmenprofil 13 weist zu diesem Zweck erste Ausnehmungen 14 auf, das zweite Rahmenprofil 16 zweite Ausnehmungen 17. Die ersten und zweiten Ausnehmungen 14, 17 sind am vertikalen Profilsteg 37 der Rahmenprofile 13, 16 vorgesehen. Die Anordnung 15 weist weiterhin ein Schwenklager 18 auf, welches eine um die Schwenkachse 19 des Schwenklagers 18 schwenkbare und normal auf dieselbe ausgerichtete allgemein zylindrische Ausnehmung 20 aufweist, die mit dem zweiten Abschnitt 6 der Förderrolle 1 korrespondiert. Das heißt, dass die Förderrolle 1 mit dem zweiten Abschnitt 6 der Achse 2 in die Ausnehmung 20 des Schwenklagers 18 eingesteckt werden kann. Der zweite Abschnitt 6 der Förderrolle 1 ist in diesem Beispiel zylinderförmig und weist ein optionales Gewinde auf. Dadurch kann die Förderrolle 1 mit einer Mutter 22 mit dem Schwenklager 18 verschraubt werden. Das Schwenklager 18 selbst wird an der Außenseite des ersten Rahmenprofils 13 am Profilsteg 37, insbesondere mit einem Gegenhalter 21 sowie Muttern 22, befestigt.

In einer vorteilhaften Ausführungsform der Förderrolle 1 ist der dritte Abschnitt 7 der Förderrolle 1 gegenüber dem ersten und zweiten Abschnitt 5, 6 axial verschiebbar, insbesondere federnd, gelagert. Auf diese Weise ist es möglich, die Förderrolle 1 zuerst mit den ersten Abschnitt 5 beziehungsweise zweiten Abschnitt 6 in die erste Ausnehmung 14 im ersten Rahmenprofil 13 einzusetzen und danach durch Eindrücken des dritten Abschnitts 7 in die zweite Ausnehmung 17 im zweiten Rahmenprofil 16 einzusetzen (oder auch umgekehrt). Die Förderrolle 1 kann somit im Prinzip werkzeuglos in eine Förderanlage eingebaut respektive aus dieser wieder ausgebaut werden. Selbstverständlich kann diese Förderrolle 1 wie in der Fig. 4 dargestellt auch noch zusätzlich mit einer Mutter 22 fixiert werden. Der Formschluss zwischen dem ersten Abschnitt 5 und der ersten Ausnehmung 14 respektive zwischen dem dritten Abschnitt 7 und der zweiten Ausnehmung 17 ist dabei sehr hilfreich, da beim Anziehen der Mutter 22 nicht gegengehalten werden muss.

Die Förderrolle 1 ist nun mit ihrem ersten Achsende über das flexibel einstellbare Schwenklager 18 am ersten Rahmenprofil 13 und mit ihrem zweiten Achsende direkt im zweiten Rahmenprofil 16 derart gelagert, dass nahezu beliebige Schrägstellungen (insbesondere -10° bis 0° und 0° bis 10°) der Förderrolle 1 erzielt werden können.

Selbstverständlich kann die Förderrolle 1 mit Hilfe des Schwenklagers 18 auch gerade eingebaut werden. In diesem Fall kann auf die Unterlegscheibe 10 verzichtet werden. Bevorzugt wird für den geraden Einbau aber der erste Abschnitt 5 in die erste Ausnehmung 14 und der dritte Abschnitt 7 in die zweite Ausnehmung 17 eingesetzt, ohne dass dazu ein Schwenklager 18 verwendet wird.

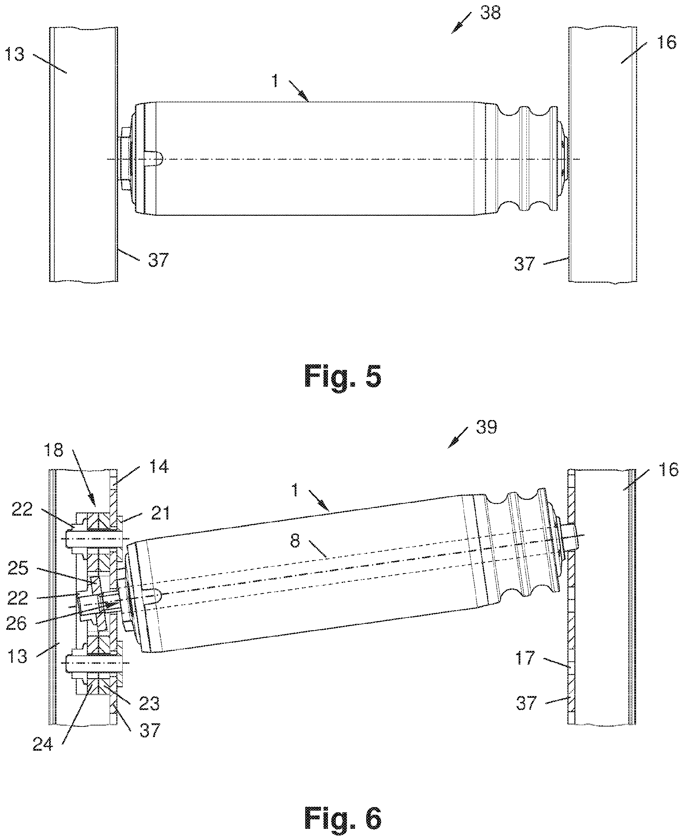

Fig. 5 zeigt dazu einen ersten Förderabschnitt 38 einer Förderanlage in Draufsicht, bei der eine oder mehrere Förderrolle(n) 1 gerade zwischen zwei Rahmenprofilen 13 und 16 eingebaut ist beziehungsweise sind.

Die Fig. 6 zeigt weiterhin einen zweiten Förderabschnitt 39 einer Förderanlage im Horizontalschnitt, bei der zumindest eine Förderrolle 1 mit Hilfe des Schwenklagers 18 schräg zwischen zwei Rahmenprofilen 13 und 16 eingebaut ist. In der Fig. 6 ist auch erkennbar, dass der zweite Abschnitt 6 mit der Ausnehmung 20 in der Schwenkplatte 25 des Schwenklagers 18 korrespondiert. Insbesondere liegt der erste Absatz 4 an der rechten Seite der Schwenkplatte 25 an und wird mit Hilfe der Mutter 22 gegen dieselbe gezogen. In der Fig. 6 liegt auch die linke Stirnfläche der Förderrolle 1 respektive die Schutzkappe 9 wegen der starken Schrägstellung am ersten Rahmenprofil 13 an. Prinzipiell kann aber auch Luft zwischen der Förderrolle 1 und dem ersten Rahmenprofil 13 sein, insbesondere bei einer geringeren Schrägstellung. In der Fig. 6 ist schließlich auch der zweite Absatz 26 zwischen dem ersten Abschnitt 5 und dem vierten Abschnitt 8 der Achse 2 zu sehen.

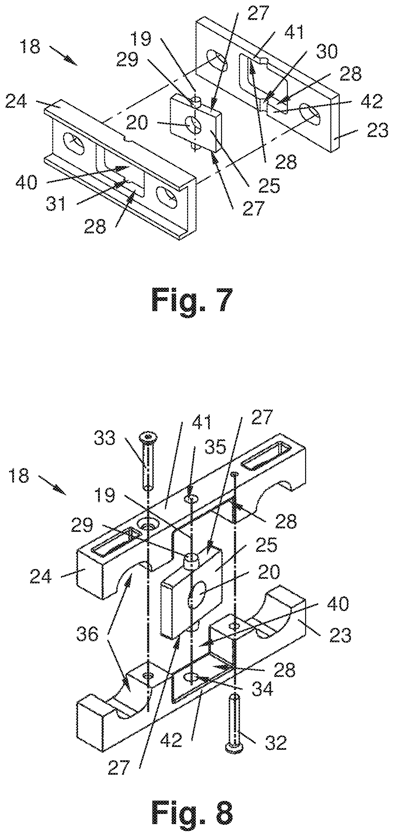

Die Fig. 7 zeigt das in Fig. 6 verwendete Schwenklager 18 nun isoliert in Explosionsdarstellung. Das Schwenklager 18 umfasst einen Grundkörper, welcher in diesem Beispiel die beiden Teile 23, 24 umfasst, und eine (hier im Wesentlichen quaderförmige) Schwenkplatte 25, welche im Grundkörper respektive in einer Aufnahme 40 desselben um eine Schwenkachse 19 drehbar gelagert ist. Die Schwenkplatte 25 weist eine normal auf die genannte Schwenkachse 19 ausgerichtete allgemein zylindrische Ausnehmung 20 auf, sowie normal auf die Schwenkachse 19 stehende Führungsflächen 27. Die Führungsflächen 27 korrespondieren mit ebenfalls normal auf die Schwenkachse 19 stehenden Führungsflächen 28 im Grundkörper 23, 24, die von einem ersten Seitenwandteil 41 und einem zweiten Seitenwandteil 42 begrenzt sind.

In diesem Beispiel umfasst die Schwenkplatte 25 jeweils koaxial zur Schwenkachse 19 verlaufende und normal aus den Führungsflächen 27 herausragende zylindrische Drehzapfen 29, welche in dem mehrteilig ausgeführten Grundkörper 23, 24 gelagert sind. Im ersten Teil 23 sind dazu zwei erste Halbschalen 30 und in dem zweiten Teil 24 zwei zweite Halbschalen 31 für die Aufnahme der genannten Drehzapfen 29 angeordnet. Dadurch ergibt sich ein vergleichsweise kompakter Aufbau des Schwenklagers 18, das durch einfaches Zusammenfügen der beiden Teile 23, 24 aufgebaut werden kann.

Ist konstruktiv (wenn auch nur geringfügig) ein Spiel zwischen den Führungsflächen 27 und den Führungsflächen 28 vorgesehen, so wird ein auf die Schwenkplatte 25 um die Achse der Ausnehmung 20 wirkendes Drehmoment von den Drehzapfen 29 beziehungsweise deren Lagerung 30, 31 aufgenommen, wie dies nach der Ausführung gemäß Fig. 7 sein kann. Dazu sind die Drehzapfen 29 "spielfrei" in den Halbschalen 30, 31 gelagert. Dies kann insbesondere dadurch bewerkstelligt werden, dass die Halbschalen 30, 31 weniger tief als der Durchmesser der Drehzapfen 29 sind. Werden die Teile 23, 24 miteinander verbunden, beispielweise durch eine lösbare Verbindungsvorrichtung, wie dem Gegenhalter 21 und den Muttern 22, so wird die Schwenkplatte 25 über die Drehzapfen 29 in den Halbschalen 30, 31 zwischen den Teilen 23, 24 "spielfrei" (daher ohne Spiel) gehalten/gelagert bzw. die Drehzapfen 29 zwischen den Teilen 23, 24 geringfügig vorgespannt.

Fig. 8 zeigt eine alternative Ausführungsform eines Schwenklagers 18, welches dem in Fig. 7 dargestellten Schwenklager 18 ähnlich ist. Allerdings verläuft die Teilebene zwischen den Teilen 23 und 24 anders. Daher werden für den Zusammenbau des Schwenklagers 18 zwei gesonderte Schrauben 32, 33 eingesetzt, wohingegen das Schwenklager 18 aus der Fig. 7 im Prinzip alleine mit Hilfe des Gegenhalters 21 und der Muttern 22 zusammengebaut werden kann. Vorteilhaft kann das Schwenklager 18 der Fig. 8 somit schon vor dem Einbau auf/in das Rahmenprofil 13 fertig zusammengebaut werden. Aufgrund der nun anders verlaufenden Teilebene sind für die Drehzapfen 29 anstelle der Halbschalen 30, 31 nun Lageraufnahmen 34, 35 vorgesehen, die jeweils vollständig in einem der Teile 23, 24 des Grundkörpers enthalten sind. Aus demselben Grund sind nun auch Halbschalen 36 für den Gegenhalter 21 vorgesehen.

Vorteilhaft wird ein auf die Schwenkplatte 25 um die Achse der Förderrolle 1 wirkendes Drehmoment von den sich berührenden Führungsflächen 27 der Schwenkplatte 25 und den Führungsflächen 28 des Grundkörpers 23, 24 aufgenommen.

Die Führungsflächen 27 der Schwenkplatte 25 berühren die Führungsflächen 28 des Grundkörpers 23, 24 in diesem Fall also schon im unbelasteten Zustand, das heißt ohne Aufbringen eines Drehmoments auf die Schwenkplatte 25. Dies kann beispielsweise dadurch bewerkstelligt werden, dass die Schwenkplatte 25 spielfrei in die dafür vorgesehene Aufnahme 40 im Grundkörper 23, 24 eingepasst wird (Fig. 7) oder die für die Schwenkplatte 25 vorgesehenen, nutartigen Aufnahmeabschnitte in den Teilen 23, 24 in Summe weniger tief als die Schwenkplatte 25 hoch sind. Auf diese Weise werden die Führungsflächen 27 der Schwenkplatte 25 und die Führungsflächen 28 des Grundkörpers 23, 24 beim Anziehen der Schrauben 32, 33 aneinander gepresst (siehe Fig. 8). Selbstverständlich kann aber auch bei dem in Fig. 8 gezeigten Schwenklager 18 ein Spiel zwischen den Führungsflächen 27 und den Führungsflächen 28 vorgesehen sein.

Ist konstruktiv (wenn auch nur geringfügig) ein Spiel zwischen den Drehzapfen 29 und den Lagerungen 34, 35 vorgesehen, so wird ein auf die Schwenkplatte 25 um die Achse der Ausnehmung 20 wirkendes Drehmoment von den sich berührenden Führungsflächen 27 der Schwenkplatte 25 und den Führungsflächen 28 des Grundkörpers 23, 24 aufgenommen, wie dies nach der Ausführung gemäß Fig. 8 sein kann. Dazu sind die Drehzapfen 29 "spielarm" (daher mit einem geringfügigen Spiel) in den Lageraufnahmen 34, 35 gelagert. Dies kann insbesondere dadurch bewerkstelligt werden, dass die Lageraufnahmen 34, 35 (wenn auch nur geringfügig) größer als der Durchmesser der Drehzapfen 29 sind. Werden die Teile 23, 24 miteinander verbunden, beispielweise durch eine lösbare Verbindungsvorrichtung, wie den Schrauben 32, 33, so wird die Schwenkplatte 25 über die Führungsflächen 27 zwischen den Teilen 23, 24 "spielfrei" (daher ohne Spiel) gehalten bzw. die Schwenkplatte 25 geringfügig vorgespannt.

Durch die "spielfreie" Lagerung/Halterung der Schwenkplatte 25 im Grundkörper 23, 24 und in einer Ebene senkrecht zur Achse der Ausnehmung 20, wird auch bei einem um die Achse der Ausnehmung 20 wirkenden Drehmoment, welches von der motorisierten oder mitgetriebenen Förderrolle 1 ausgeübt wird, eine Verdrehung der Schwenkplatte 25 gegenüber dem Grundkörper 23, 24 in der Ebene senkrecht zur Achse der Ausnehmung 20 vermieden.

Die Drehmomentübertragung erfolgt generell relativ starr, insbesondere wenn diese über die vergleichsweise großen Führungsflächen 27, 28 erfolgt. Schwingungsphänomene, die zum Beispiel bei zu weicher Lagerung der Förderrolle 1 durch eine Motorregelung für den Antriebsmotor der Förderrolle 1 verursacht oder verstärkt werden könnten, treten daher nicht oder zumindest nur in abgeschwächter Form auf.

Die beiden Teile 23, 24 des Grundkörpers und/oder die Schwenkplatte 25 können generell aus einem metallischen Werkstoff bestehen, etwa aus Stahl, Aluminium oder auch einem Sinterwerkstoff. Gleichermaßen ist vorstellbar, dass die beiden Teile 23, 24 des Grundkörpers und/oder die Schwenkplatte 25 aus einem Kunststoff, insbesondere einem faserverstärkten Kunststoff bestehen. Im Speziellen kann die Schwenkplatte 25 aus Stahl und der Grundkörper 23, 24 aus Kunststoff bestehen. Besonders in diesem Fall kann es sein, dass sich das Lagerspiel zwischen dem/den Drehzapfen 29 und den Halbschalen 30, 31 respektive den Lagerungen 34, 35 im Laufe der Zeit vergrößert und ein Drehmoment um die Achse der Förderrolle 1 auch bei anfänglich spielfreier/spielarmer Lagerung des Drehzapfens 29 letztlich über die Führungsflächen 27 und 28 übertragen wird.
In den gezeigten Beispielen weisen die Schwenkplatten 25 jeweils zwei Drehzapfen 29 auf. Selbstverständlich könnte eine Schwenkplatte 25 auch nur einen Drehzapfen aufweisen, welcher gegebenenfalls länger ausgeführt wird, um eine sichere Lagerung der Schwenkplatte 25 im Grundkörper 23, 24 zu gewährleisten.
Auch der Grundkörper 23, 24 muss nicht mehrteilig ausgeführt sein, sondern könnte auch einteilig ausgeführt sein. In diesem Fall können anstelle der Drehzapfen 29 zum Beispiel gesonderte Bolzen seitlich durch Bohrungen des Grundkörpers hindurch in Bohrungen der Schwenkplatte 25 gesteckt werden, die entlang der Schwenkachse 19 ausgerichtet sind.

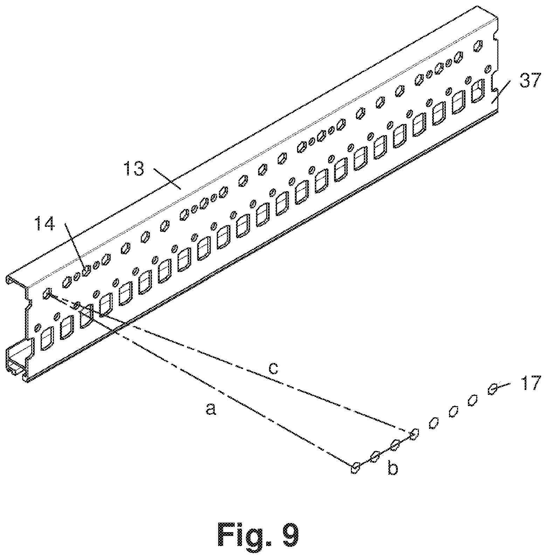

In den Figuren 4, 6 und 8 ist erkennbar, dass das erste Rahmenprofil 13 mehrere in dessen Längsrichtung voneinander beabstandete erste Ausnehmungen 14 und das zweite Rahmenprofil 16 mehrere in dessen Längsrichtung voneinander beabstandete zweite Ausnehmungen 17 in den Profilstegen 37 aufweisen, wobei je eine erste Ausnehmung 14 je einer zweiten Ausnehmung 17 direkt gegenüberliegt. Fig. 9 zeigt dazu eine vereinfachte Darstellung, bei der vom zweiten Rahmenprofil 16 nur einige zweite Ausnehmungen 17 gezeigt sind. Vorteilhaft erfüllt die Anordnung 15 folgende Kriterien:
- der Abstand "a" zwischen dem ersten und zweiten Rahmenprofil 13, 16 ist derart bemessen, dass der erste Abschnitt 5 und der dritte Abschnitt 7 der Achse 2 bei geradem Einbau der Förderrolle 1 in direkt gegenüberliegende erste und zweite Ausnehmungen 14, 17 der Rahmenprofilen 13, 16 zu liegen kommen (wobei der zweite Abschnitt 6 dementsprechend über das erste Rahmenprofil 13 hinaus ragt) und
- der Längsabstand "b" der ersten beziehungsweise zweiten Ausnehmungen 14, 17 ist derart bemessen, dass der erste Abschnitt 5 der Achse 2 bei schrägem Einbau der Förderrolle 1 in einer ersten Ausnehmung 14 des ersten Rahmenprofils 13, der zweite Abschnitt 6 der Achse 2 in der zylindrischen Ausnehmung 20 des bei der ersten Ausnehmung 14 außen am ersten Rahmenprofil 13 montierten Schwenklagers 18, insbesondere in der Schwenkplatte 25 des Schwenklagers 18, und der dritte Abschnitt 7 der Achse 2 in einer der ersten Ausnehmung 14 schräg gegenüberliegenden zweiten Ausnehmung 17 im zweiten Rahmenprofil 16 zu liegen kommen.

Mit anderen Worten wird der erste Absatz 4 zwischen dem ersten Abschnitt 5 und dem zweiten Abschnitt 6 beim schrägen Einbau der Förderrolle 1 verwendet, indem dieser in Anlage mit der Schwenkplatte 25 gebracht wird. Bei geradem Einbau der Förderrolle 1 wird dagegen der zweite Absatz 26 zwischen erstem Abschnitt 5 und viertem Abschnitt 8 in Anlage mit dem ersten Rahmenprofil 13 gebracht, insbesondere unter Zuhilfenahme der Unterlegscheibe 10.

Ein und dieselbe Förderrolle 1 kann somit gerade zwischen den Rahmenprofilen 13, 16 platziert als auch schräg zwischen diesen eingebaut werden. Dadurch, dass die genannten Absätze 4, 26 auf der Achse 2 in Axialrichtung der Förderrolle 1 voneinander beabstandet sind, beziehungsweise dadurch, dass der zweite Abschnitt 6 der Förderrolle 1 etwas weiter außen liegt als der erste Abschnitt 5, kann der für den schrägen Einbau erforderliche Längenausgleich erfolgen (vergleiche dazu die Längen "a" und "c" in der Fig. 8). Durch den verschiebbar und insbesondere federnd gelagerten dritten Abschnitt 7 und/oder durch Weglassen der für den geraden Einbau vorgesehenen Unterlegscheibe 10 kann dies ebenfalls unterstützt beziehungsweise bewirkt werden. Der Abstand "a" zwischen den Rahmenprofilen 13 und 16 und/oder der Längsabstand der Ausnehmungen 14 und 17 in den Rahmenprofilen 13 und 16 können dabei jedoch unverändert bleiben. Auch ist eine Sonderanfertigung von speziellen Rahmenprofilen, wie dies zum Beispiel nach der EP 1 222 125 B1 erforderlich ist, nach der erfindungsgemäßen Ausführung nicht nötig.

Mit Hilfe des im zweiten Abschnitt 6 angeordneten Gewindes und einer Mutter 22 kann die Förderrolle 1 mit dem ersten Rahmenprofil 13 verschraubt werden. Zu diesem Zweck kann auch eine spezielle Unterlegscheibe 10 (vorzugsweise aus Stahl) an den zweiten Absatz 26 zwischen dem ersten Abschnitt 5 und dem vierten Abschnitt 8 angelegt werden, um für die sichere Übertragung der Axialkräfte zu sorgen und um ein Ausreißen der ersten Ausnehmung 14 im ersten Rahmenprofil 13 zu verhindern, das üblicherweise aus Aluminium hergestellt ist.

Wie aus den Figuren 4 und 6 ersichtlich ist, kommt bei dem dargestellten Beispiel eine spezielle Mutter 22 zum Einsatz, welche ein Hervorragen des ersten und nicht notwendigerweise mit einem Gewinde ausgestatteten Abschnitts 5 der Förderrolle 1 aus dem ersten Rahmenprofil 13 ermöglicht. Die Mutter 22 weist zu diesem Zweck einen dem ersten Rahmenprofil 13 zugewandten Hohlraum auf, in dem der erste Abschnitt 5 aufgenommen wird. Der Hohlraum kann zum Beispiel als eine zylinderförmige, dem Gewinde der Mutter 22 vorgelagerte, Bohrung ausgeführt sein. Der Bohrungsdurchmesser ist dabei größer als der Gewindedurchmesser.

Um den schrägen Einbau der Förderrolle 1 zu ermöglichen, beziehungsweise um ein Verklemmen der Verbindung zwischen Förderrolle 1 und den Rahmenprofilen 13, 16 zu vermeiden, sollte generell ein ausreichendes Spiel zwischen den Ausnehmungen 14, 17 in den Rahmenprofilen 13, 16 und dem ersten und dritten Abschnitt 5, 7 der Förderrolle 1 vorgesehen werden. Um ein Wackeln der Förderrolle 1 trotz des genannten Spiels zu verhindern, kann der dritte Abschnitt 7 auch konisch ausgeführt sein. Dadurch ergibt sich sowohl bei geradem Einbau der Förderrolle 1 als auch bei schrägem Einbau derselben eine spielfreie/spielarme Aufnahme des dritten Abschnitts 7 in der zweiten Ausnehmung 17, insbesondere wenn der dritte Abschnitt 7 verschiebbar gelagert und gefedert ist. Diese Maßnahmen sind insbesondere dann von Vorteil, wenn die Förderrolle 1 nicht mit dem zweiten Rahmenprofil 16 verschraubt wird. Auch am dritten Abschnitt 7 kann eine spielfreie/spielarme Aufnahme zur Vermeidung der bereits weiter oben erwähnten Schwingungsphänomene beitragen.

Mit anderen Worten ergibt sich eine Förderanlage zum Transport von Objekten, insbesondere von Ladehilfsmittel, wie Behältern, Tablaren, mittels Förderrollen 1 in mehreren Förderabschnitten 38, 39, mit
- einem ersten Rahmenprofil 13,
- einem zweiten Rahmenprofil 16,
   wobei das erste und zweite Rahmenprofil 13, 16 mit gegenseitigem Abstand "a" parallel zueinander und in Förderrichtung der Objekte verlaufen sowie jeweils einen vertikalen Profilsteg 37 mit in diesen in der Förderrichtung hintereinander angeordneten Ausnehmungen 14, 17 zur Aufnahme einer Achse 2 der Förderrollen 1 aufweisen,
- einem ersten Förderabschnitt 38, in welchem die Förderrollen 1 mit ihren Achsen 2 im Wesentlichen normal zum Profilsteg 37 zwischen dem ersten und zweiten Rahmenprofil 13, 16 angeordnet sind,
- einem zweiten Förderabschnitt 39, in welchem die Förderrollen 1 mit ihren Achsen 2 winkelig zum Profilsteg 37 zwischen dem ersten und zweiten Rahmenprofil 13, 16 angeordnet sind,
- zumindest einer motorisierten Förderrolle 1 im zweiten Förderabschnitt 39,
- zumindest einem Schwenklager 18 im zweiten Förderabschnitt 39, welches die motorisierte Förderrolle 1 an einem Ende mit ihrer Achse 2 lagert, umfassend
   einen einteiligen oder mehrteiligen Grundkörper 23, 24 und
   eine Schwenkplatte 25, welche am Grundkörper 23, 24 in einer Aufnahme 40 um eine Schwenkachse 19 drehbar gelagert ist, welche eine normal auf die genannte Schwenkachse 19 ausgerichtete Ausnehmung 20 umfasst und welche normal auf die Schwenkachse 19 stehende Führungsflächen 27 aufweist,
   wobei das Schwenklager 18 mit seinem Grundkörper 23, 24 über eine lösbare Befestigungsvorrichtung 22 am Rahmenprofil 13 beziehungsweise dessen Profilsteg 37 montiert ist,
   wobei
- das erste Rahmenprofil 13 und zweite Rahmenprofil 16 im ersten Förderabschnitt 38 und zweiten Förderabschnitt 39 gleichartig ausgebildet sind, und
- der Grundkörper 23, 24 oberhalb und unterhalb der Schwenkplatte 25 sowie normal zur Schwenkachse 19 verlaufend einen (oberen) ersten Seitenwandteil 41 und (unteren) zweiten Seitenwandteil 42 ausbildet, welche die Aufnahme 40 begrenzen, wobei die Schwenkplatte 25 innerhalb der Aufnahme 40 am (oberen) ersten Seitenwandteil 41 und (unteren) zweiten Seitenwandteil 42 spielfrei oder spielarm gelagert und gegenüber dem ortsfesten Grundkörper 23, 24 um die Schwenkachse 19 drehbar angeordnet ist, und
- das Schwenklager 18 mit seinem Grundkörper 23, 24 über die lösbare Befestigungsvorrichtung 22 am senkrechten Profilsteg 37 zumindest des ersten Rahmenprofils 13 montiert und derart gegenüber dem ersten Rahmenprofil 13 positioniert ist, dass die Achse 2 der motorisierten Förderrolle 1 sowohl eine der Ausnehmungen 14 im vertikalen Profilsteg 37 und die Ausnehmung 20 in der Schwenkplatte 25 durchragt.

Der erste Förderabschnitt 38 (wie abschnittsweise in Fig. 5 dargestellt) umfasst üblicherweise mehrere Förderrollen 1. Eine oder einige der Förderrollen 1 sind motorisierte Förderrollen 1. Die anderen der Förderrollen 1 sind nicht angetriebene Förderrollen 1 oder von den motorisierten Förderrollen 1 mitgetriebene Förderrollen 1. Möglich ist aber auch eine Ausführung, bei der sämtliche Förderrollen nicht angetrieben sind.

Der zweite Förderabschnitt 39 (wie abschnittsweise in Fig. 6 dargestellt) umfasst üblicherweise mehrere Förderrollen 1, wobei ebenso eine oder einige der Förderrollen 1 motorisiert sind und die anderen der Förderrollen 1 nicht angetrieben (frei drehende Förderrollen) oder von der motorisierten Förderrollen 1 mitgetrieben werden. Diese Förderrollen 1 sind jeweils mit ihrem einen Achsende über das beschriebene Schwenklager 18 am ersten Rahmenprofil 13 gehalten.
Die Ausführungsbeispiele zeigen mögliche Ausführungsvarianten einer erfindungsgemäßen Förderrolle 1, sowie einer erfindungsgemäßen Förderanlage, wobei an dieser Stelle bemerkt sei, dass die Erfindung nicht auf die speziell dargestellten Ausführungsvarianten derselben bzw. desselben eingeschränkt ist, sondern vielmehr auch diverse Kombinationen der einzelnen Ausführungsvarianten untereinander möglich sind, soweit sie den durch die Ansprüche definierten Schutzbereich der Erfindung nicht überschreiten. Der Ordnung halber sei abschließend darauf hingewiesen, dass zum besseren Verständnis des Aufbaus der Förderrolle 1, des Schwenklagers 18 sowie der Förderanlage diese/dieses beziehungsweise deren/dessen Bestandteile teilweise unmaßstäblich und/oder vergrößert und/oder verkleinert dargestellt wurden.

**Bezugszeichenaufstellung**

| | | | |
|---|---|---|---|
| 1 | Förderrolle | 36 | Halb schalen |
| 2 | Achse | 37 | vertikaler Profilsteg |
| 3 | Rollenkörper | 38 | erster Förderabschnitt |
| 4 | erster Absatz | 39 | zweiter Förderabschnitt |
| 5 | erster Abschnitt der Achse | 40 | Aufnahme für Schwenkplatte |
| | | | |
| 6 | zweiter Abschnitt der Achse | 41 | erster Seitenwandteil |
| 7 | dritter Abschnitt der Achse | 42 | zweiter Seitenwandteil |
| 8 | vierter Abschnitt der Achse | | |
| 9 | Abdeckung | a | Querabstand direkt gegenüber lie-gender Ausnehmungen |
| 10 | Unterlegscheibe | | |
| | | b | Längsabstand hintereinander lie-gender Ausnehmungen |
| 11 | Anschlusskabel | | |
| 12 | Rille | c | Querabstand schräg gegenüberliegender Ausnehmungen |
| 13 | erstes Rahmenprofil | | |
| 14 | erste Ausnehmung | | |
| 15 | Anordnung | | |
| | | | |
| 16 | zweites Rahmenprofil | | |
| 17 | zweite Ausnehmung | | |
| 18 | Schwenklager | | |
| 19 | Schwenkachse | | |
| 20 | zylindrische Ausnehmung | | |
| | | | |
| 21 | Gegenhalter | | |
| 22 | Mutter | | |
| 23 | erster Teil des Grundkörpers | | |
| 24 | zweiter Teil des Grundkörpers | | |
| 25 | Schwenkplatte | | |
| | | | |
| 26 | zweiter Absatz | | |
| 27 | Führungsfläche der Schwenkplatte | | |
| 28 | Führungsfläche des Grundkörpers | | |
| 29 | Drehzapfen | | |
| 30 | Halbschale für Drehzapfen | | |
| | | | |
| 31 | Halbschale für Drehzapfen | | |
| 32 | Schraube | | |
| 33 | Schraube | | |
| 34 | Lagerung | | |
| 35 | Lagerung | | |

## Patentansprüche

1. Anordnung (15) umfassend
- ein erstes Rahmenprofil (13) mit mehreren in dessen Längsrichtung voneinander beabstandeten ersten Ausnehmungen (14),
- ein zweites Rahmenprofil (16) mit mehreren in dessen Längsrichtung voneinander beabstandeten zweiten Ausnehmungen (17),
- eine Förderrolle (1) und
- ein Schwenklager (18),
wobei das erste Rahmenprofil (13) und zweite Rahmenprofil (16) in einem Abstand verlaufen, und
wobei je eine erste Ausnehmung (14) je einer zweiten Ausnehmung (17) direkt gegenüberliegt, und
wobei eine erste Ausnehmung (14) des ersten Rahmenprofils (13) mit einem ersten Abschnitt (5) der Förderrolle (1) und eine zweite Ausnehmung (17) des zweiten Rahmenprofils (13) mit einem dritten Abschnitt (7) der Förderrolle (1) korrespondiert, und
wobei die Förderrolle (1) eine Achse (2) und einen um diese Achse (2) drehbar gelagerten Rollenkörper (3) umfasst, wovon wenigstens ein erstes Ende der Achse (2) in dem über den Rollenkörper (3) ragenden Teil einen ersten Absatz (4) zwischen dem rollenseitig liegenden ersten Abschnitt (5) mit einem größeren ersten Querschnitt und einem relativ zum ersten Absatz (4) gegenüber liegenden zweiten Abschnitt (6) mit einem kleineren zweiten Querschnitt aufweist,
wobei
- das Schwenklager (18) eine um die Schwenkachse (19) des Schwenklagers (18) schwenkbare und normal auf dieselbe ausgerichtete Ausnehmung (20) aufweist, welche mit dem zweiten Abschnitt (6) der Achse (2) korrespondiert, **dadurch gekennzeichnet, dass**
- die Ausnehmung (20) allgemein zylindrisch ist,
- der Abstand (a) zwischen dem ersten und zweiten Rahmenprofil (13, 6) derart bemessen ist, dass der erste Abschnitt (5) und der dritte Abschnitt (7) der Achse (2) bei geradem Einbau der Förderrolle (1) in direkt gegenüberliegende erste und zweite Ausnehmungen (14, 17) der Rahmenprofilen (13, 16) zu liegen kommen und
- der Längsabstand (b) der ersten beziehungsweise zweiten Ausnehmungen (12, 17) derart bemessen ist, dass der erste Abschnitt (5) der Achse (2) bei schrägem Einbau der Förderrolle (1) in einer ersten Ausnehmung (14) des ersten Rahmenprofils (13), der zweite Abschnitt (6) der Achse (2) in der zylindrischen Ausnehmung (20) des bei der ersten Ausnehmung (14) außen am ersten Rahmenprofils (13) montierten Schwenklagers (18) und der dritte Abschnitt (7) der Achse (2) in einer der ersten Ausnehmung (14) schräg gegenüberliegenden zweiten Ausnehmung (17) im zweiten Rahmenprofl (16) zu liegen kommen.

2. Anordnung (15) nach Anspruch 1, **dadurch gekennzeichnet, dass** die erste Ausnehmung (14) sechskantformig ist und der erste Abschnitt (5) formschlüssig in die sechseckige Ausnehmung (14) des ersten Rahmenprofils (13) einsteckbar und der zweite Abschnitt (6) zylinderförmig ist.

3. Anordnung (15) nach Anspruch 2, **dadurch gekennzeichnet, dass** der erste Abschnitt (5) eine Vierkantform oder eine vierarmige Sternform aufweist.

4. Anordnung (15) nach Anspruch 1 oder 2, **dadurch gekennzeichnet, dass** der zweite Abschnitt (6) ein Gewinde aufweist.

5. Anordnung (15) nach Anspruch 1, **dadurch gekennzeichnet, dass** die zweite Ausnehmung (17) sechskantförmig ist und der dritte Abschnitt (7) formschlüssig in die zweite sechseckige Ausnehmung (17) des zweiten Rahmenprofiis (16) einsteckbar ist.

6. Anordnung (15) nach Anspruch 1, **dadurch gekennzeichnet, dass** der dritte Abschnitt (7) gegenüber dem ersten und zweiten Abschnitt (5, 6) axial verschiebbar, insbesondere federnd, gelagert ist.

7. Anordnung (15) nach Anspruch 2 oder 5, **dadurch gekennzeichnet, dass** der Sechskant eine Schlüsselweite SW=11 mm aufweist.

8. Anordnung (15) nach einem der Ansprüche 1 bis 7, **gekennzeichnet durch** einen dem ersten Abschnitt (5) rollenseitig benachbart gelegenen vierten Abschnitt (8) mit kreisförmigem Querschnitt, der kleiner ist als der Umkreis des genannten Sechskants.

9. Anordnung (15) nach Anspruch 8, **dadurch gekennzeichnet, dass** der vierte Querschnitt einen Durchmesser von 12 mm aufweist.

10. Förderanlage zum Transport von Objekten, insbesondere von Ladehilfsmittel, wie Behältern, Tablaren, mittels Förderrollen (1) in mehreren Förderabschnitten (38, 39), mit
- einem ersten Rahmenprofil (13), welches einen vertikalen Profilsteg (3 7) mit in diesen in der Förderrichtung hintereinander angeordneten ersten Ausnehmungen (14) zur Aufnahme einer Achse (2) der Förderrollen (1) aufweisen,
- einem zweiten Rahmenprofils (16), wobei das zweite Rahmenprofil (16) einen vertikalen Profilsteg (37) mit in diesen in der Förderrichtung hintereinander angeordneten zweiten Ausnehmungen (17) zur Aufnahme einer Achse (2) der Förderrollen (1) aufweisen,
wobei das erste Rahmenprofil (13) und zweite Rahmenprofil (16) im ersten Förderabschnitt (38) und zweiten Förderabschnitt (39) gleichartig ausgebildet sind, und
wobei das erste Rahmenprofil (13) und zweite Rahmenprofil (16) mit gegenseitigem Abstand (a) parallel zueinander und in Förderrichtung der Objekte verlaufen,
- einem ersten Förderabschnitt (38), in welchem die Förderrollen (1) mit ihren Achsen (2) im Wesentlichen normal zum Profilsteg (37) zwischen dem ersten und zweiten Rahmenprofil (13, 16) angeordnet sind, wobei zumindest eine der Förderrollen (1) im ersten Förderabschnitt (38) eine motorisierte Förderrolle (1) ist,
- einem zweiten Förderabschnitt (39), in welchem die Förderrollen (1) mit ihren Achsen (2) winkelig zum Profilsteg (37) zwischen dem ersten und zweiten Rahmenprofl (13, 16) angeordnet sind, wobei zumindest eine der Förderrollen (1) im zweiten Förderabschnitt (39) eine motorisierte Förderrolle (1) ist,
wobei eine erste Ausnehmung (14) des ersten Rahmenprofils (13) mit einem ersten Abschnitt (5) der motorisierten Förderrolle (1) und eine zweite Ausnehmung (17) des zweiten Rahmenprofils (13) mit einem dritten Abschnitt (7) der motorisierten Förderrolle (1) korrespondiert,
wobei sowohl die motorisierte Förderrolle (1) im ersten Förderabschnitt (38) als auch die motorisierte Förderrolle (1) im zweiten Förderabschnitt (38) jeweils eine Achse (2) und einen um diese Achse (2) drehbar gelagerten Rollenkörper (3) umfasst, wovon wenigstens ein erstes Ende der Achse (2) in dem über den Rollenkörper (3) ragenden Teil einen ersten Absatz (4) zwischen dem rollenseitig liegenden ersten Abschnitt (5) mit einem größeren ersten Querschnitt und einem relativ zum ersten Absatz (4) gegenüber liegenden zweiten Abschnitt (6) mit einem kleineren zweiten Querschnitt aufweist,
- zumindest einem Schwenklager (18) im zweiten Förderabschnitt (39), welches die motorisierte Förderrolle (1) an einem Ende mit ihrer Achse (2) lagert, umfassend
einen einteiligen oder mehrteiligen Grundkörper (23, 24) und
eine Schwenkplatte (25), welche am Grundkörper (23, 24) in einer Aufnahme (40) um eine Schwenkachse (19) drehbar gelagert ist, welche eine normal auf die genannte Schwenkachse (19) ausgerichtete Ausnehmung (20) umfasst und welche normal auf die Schwenkachse (19) stehende Führungsflächen (27) aufweist,
wobei der Grundkörper (23, 24) oberhalb und unterhalb der Schwenkplatte (25) sowie normal zur Schwenkachse (19) verlaufend einen ersten Seitenwandteil (41) und zweiten Seitenwandteil (42) ausbildet, welche die Aufnahme (40) begrenzen, wobei die Schwenkplatte (25) innerhalb der Aufnahme (40) am ersten Seitenwandteil (41) und zweiten Seitenwandteil (42) gelagert und gegenüber dem ortsfesten Grundkörper (23, 24) um die Schwenkachse (19) drehbar angeordnet ist, und
wobei das Schwenklager (18) mit seinem Grundkörper (23, 24) über eine lösbare Befestigungsvorrichtung (22) am senkrechten Profilsteg (37) zumindest des ersten Rahmenprofils (13) montiert und derart gegenüber dem ersten Rahmenprofil (13) positioniert ist, dass die Achse (2) der motorisierten Förderrolle (1) sowohl eine der Ausnehmungen (14) im vertikalen Profilsteg (37) und die Ausnehmung (20) in der Schwenkplatte (25) durchragt,
**dadurch gekennzeichnet, dass**
im ersten Förderabschnitt (38), in welchem die Förderrollen (1) mit ihren Achsen (2) im Wesentlichen normal zum Profilsteg (37) zwischen dem ersten und zweiten Rahmenprofil (13,16) angeordnet sind, der erste Abschnitt (5) der motorisierten Förderrolle (1) direkt in die erste Ausnehmung (14) und der dritte Abschnitt (7) der motorisierten Förderrolle (1) direkt in die zweite Ausnehmung (17) eingesetzt ist, und
im zweiten Förderabschnitt (38), in welchem die Förderrollen (1) mit ihren Achsen (2) winkelig zum Profilsteg (37) zwischen dem ersten und zweiten Rahmenprofils (13, 16) angeordnet sind, der zweite Abschnitt (6) der motorisierten Förderrolle (1) mit der allgemein zylindrisch ausgebildeten Ausnehmung (20) in der Schwenkplatte (25) des Schwenklagers (18) korrespondiert.

11. Förderanlage nach Anspruch 10, **dadurch gekennzeichnet, dass**
- die normal auf die Schwenkachse (19) stehenden Führungsflächen (27) mit ebenfalls normal auf die Schwenkachse (19) stehenden Führungsflächen (28) im Grundkörper (23, 24) korrespondieren und
- ein auf die Schwenkplatte (25) um die Achse der Förderrolle (1) wirkendes Drehmoment von den sich berührenden Führungsflächen (27) der Schwenkplatte (25) und den Führungsflächen (28) des Grundkörpers (23, 24) aufgenommen wird.

12. Förderanlage nach Anspruch 10 oder 11, **dadurch gekennzeichnet, dass**
- die Schwenkplatte (25) zumindest einen normal aus der Führungsfläche (27) herausragenden zylindrischen Drehzapfen (29) aufweist und
- der Grundkörper mehrteilig ausgeführt ist, wobei in einem ersten Teil (23) eine erste Lagerung (34) für die Aufnahme des genannten Drehzapfens (29) angeordnet ist oder in einem ersten Teil (23) eine erste Halbschale (30) und in einem zweiten Teil (24) eine zweite Halbschale (31) für die Aufnahme des genannten Drehzapfens (29) angeordnet ist.

13. Förderanlage nach einem der Ansprüche 10 bis 12, **dadurch gekennzeichnet, dass** die Schwenkplatte (25) zwei Drehzapfen (29) der genannten Art aufweist, die in zwei Lagerungen (34, 35) oder je zwei Halbschalen (30, 31) gelagert sind.

14. Förderanlage nach einem der Ansprüche 10 bis 13, **dadurch gekennzeichnet, dass** die Schwenkplatte (25) im Wesentlichen quaderförmig ist.

## Claims

1. Assembly (15) comprising
- a first frame profile (13) having several first orifices (14) spaced apart from one another in its longitudinal direction,
- a second frame profile (16) having several second orifices (17) spaced apart from one another in its longitudinal direction,
- a conveying roller (1) and
- a pivot bearing (18),
wherein the first frame profile (13) and second frame profile (16) extend at a distance, and
wherein a second orifice (17) lies directly opposite every first orifice (14) respectively, and
wherein a first orifice (14) of the first frame profile (13) co-operates with a first section (5) of the conveying roller (1), and a second orifice (17) of the second frame profile (13) co-operates with a third section (7) of the conveying roller (1), and
wherein the conveying roller (1) comprises a shaft (2) and a roller body (3) mounted so as to be rotatable about this shaft (2), and at least a first end of the shaft (2) in the part protruding beyond the roller body (3) has a first shoulder (4) between the first section (5) located on the roller side having a larger first cross-section and a second section (6) lying opposite the first shoulder (4) having a smaller second cross-section,
- wherein the pivot bearing (18) has an orifice (20) that is pivotable about the pivot axis (19) of the pivot bearing (18) and oriented normally with respect thereto and which co-operates with the second section (6) of the shaft (2),
**characterized in that**
- the orifice (20) has a generally cylindrical shape,
- the distance (a) between the first and second frame profile (13, 16) is dimensioned such that the first section (5) and the third section (7) of the shaft (2) lie in directly opposite first and second orifices (14, 17) of the frame profiles (13, 16) when the conveying roller (1) is mounted in a straight position and
- the lengthways distance (b) of the first respectively second orifices (12, 17) is dimensioned such that when the conveying roller (1) is mounted in an oblique position, the first section (5) of the shaft (2) sits in a first orifice (14) of the first frame profile (13), the second section (6) of the shaft (2) sits in the cylindrical orifice (20) of the pivot bearing (18) mounted at the first orifice (14) on the outside of the first frame profile (13), and the third section (7) of the shaft (2) sits in one of the first orifices (14) lying obliquely opposite the second orifice (17) in the second frame profile (16).

2. Assembly (15) according to claim 1, **characterized in that** the first orifice (14) is hexagonal, and the first section (5) can be inserted in a positively fitting arrangement in the hexagonal orifice (14) of the first frame profile (13), and the second section (6) is cylindrical in shape.

3. Assembly (15) according to claim 2, **characterized in that** the first section (5) has a square shape or a four-armed star shape.

4. Assembly (15) according to claim 1 or 2, **characterized in that** the second section (6) has a thread.

5. Assembly (15) according to claim 1, **characterized in that** the second orifice (17) is hexagonal, and the third section (7) can be inserted in a positively fitting arrangement in the second hexagonal orifice (17) of the second frame profile (16).

6. Assembly (15) according to claim 1, **characterized in that** the third section (7) is mounted so as to be axially displaceable relative to the first and second sections (5, 6), in particular is spring-mounted.

7. Assembly (15) according to claim 2 or 5, **characterized in that** the hexagon has a width across flats WAF=11 mm.

8. Assembly (15) according to one of claims 1 to 7, **characterized in that** a fourth section (8) with a circular cross-section that is smaller than the circumcircle of said hexagon is provided adjacent to the first section (5) on the roller side.

9. Assembly (15) according to claim 8, **characterized in that** the fourth cross-section has a diameter of 12 mm.

10. Conveyor system for conveying objects, in particular loading aids such as containers, trays, by means of conveying rollers (1) in several conveyor sections (38, 39), comprising
- a first frame profile (13), which comprises a vertical web (37) having first orifices (14) disposed in it one after the other in the conveying direction to provide a seat for a shaft (2) of the conveying rollers (1),
a second frame profile (16), which comprises a vertical web (37) having second orifices (17) disposed in it one after the other in the conveying direction to provide a seat for a shaft (2) of the conveying rollers (1),
wherein the first frame profile (13) and second frame profile (16) in the first conveyor section (38) and second conveyor section (39) are of identical design, and
wherein the first frame profile (13) and second frame profile (16) extend parallel with one another at a mutual distance (a) apart and in the conveying direction of the objects,
- a first conveyor section (38), in which the conveying rollers (1) are disposed between the first and second frame profiles (13, 16) with their shafts (2) substantially normally with respect to the web (37), wherein at least one of the conveying rollers (1) in the first conveyor section (38) is a motorized conveying roller (1),
- a second conveyor section (39), in which the conveying rollers (1) are disposed between the first and second frame profiles (13, 16) with their shafts (2) at an angle to the web (37), wherein at least one of the conveying rollers (1) in the second conveyor section (39) is a motorized conveying roller (1),
wherein a first orifice (14) of the first frame profile (13) co-operates with a first section (5) of the motorized conveying roller (1), and a second orifice (17) of the second frame profile (13) co-operates with a third section (7) of the motorized conveying roller (1),
wherein both the motorized conveying roller (1) in the first conveyor section (38) and the motorized conveying roller (1) in the second conveyor section (38) respectively comprise a shaft (2) and a roller body (3) mounted so as to be rotatable about this shaft (2), and at least a first end of the shaft (2) in the part protruding beyond the roller body (3) has a first shoulder (4) between a first section located on the roller side (5) having a larger first cross-section and a second section (6) lying opposite the first shoulder (4) having a smaller second cross-section,
- at least one pivot bearing (18) in the second conveyor section (39), which provides a mount for the motorized conveying roller (1) at one end by its shaft (2), comprising
a single-part or multi-part main body (23, 24) and
a pivot plate (25), which is mounted on the main body (23, 24) in a seat (40) so as to be rotatable about a pivot axis (19), which comprises an orifice (20), which is oriented normally with respect to said pivot axis (19) and which has guide surfaces (27) extending normally with respect to the pivot axis (19),
wherein the main body (23, 24) forms a first side wall part (41) and a second side wall part (42) extending above and below the pivot plate (25) and extending normally with respect to the pivot axis (19), which delimit the seat (40), wherein the pivot plate (25) is mounted inside the seat (40) on the first side wall part (41) and second side wall part (42) and is disposed so as to be pivotable about the pivot axis (19) relative to the stationary main body (23, 24), and
wherein the pivot bearing (18) is mounted on the vertical web (37) of at least the first frame profile (13) by its main body (23, 24) by means of a releasable fixing device (22) and is positioned relative to the first frame profile (13) in such a way that the shaft (2) of the motorized conveying roller (1) extends through both one of the orifices (14) in the vertical web (37) and the orifice (20) in the pivot plate (25),
**characterized in that**
in the first conveyor section (38), in which the conveying rollers (1) are disposed between the first and second frame profile (13, 16) with their shafts (2) substantially normally with respect to the web (37), the first section (5) of the motorized conveying roller (1) is inserted directly in the first orifice (14) and the third section (7) of the motorized conveying roller (1) is inserted directly in the second orifice (17), and
in the second conveyor section (38), in which the conveying rollers (1) are disposed between the first and second frame profiles (13, 16) with their shafts (2) at an angle to the web (37), the second section (6) of the motorized conveying roller (1) co-operates with the generally cylindrical orifice (20) in the pivot plate (25) of the pivot bearing (18).

11. Conveyor system according to claim 10, **characterized in that**
- the guide surfaces (27) extending normally with respect to the pivot axis (19) cooperate with guide surfaces (28) in the main body (23, 24) likewise extending normally with respect to the pivot axis (19) and
- a torque acting on the pivot plate (25) around the axis of the conveying roller (1) is absorbed by the abutting guide surfaces (27) of the pivot plate (25) and the guide surfaces (28) of the main body (23, 24).

12. Conveyor system according to claim 10 or 11, **characterized in that**
- the pivot plate (25) has at least one cylindrical pivot pin (29) protruding normally out from the guide surface (27) and
- the main body is of a multi-part design, wherein a first bearing (34) for seating said pivot pin (29) is disposed in a first part (23), or a first half-shell (30) is disposed in a first part (23) and a second half-shell (31) is disposed in a second part (24) for seating said pivot pin (29).

13. Conveyor system according to one of claims 10 to 12, **characterized in that** the pivot plate (25) has two pivot pins (29) of said type, which are mounted in two bearings (34, 35) or each in two half-shells (30, 31).

14. Conveyor system according to one of claims 10 to 13, **characterized in that** the pivot plate (25) is of a substantially square shape.

## Revendications

1. Dispositif (15) comprenant
- un premier profilé de cadre (13) avec plusieurs premiers évidements (14) écartés les uns des autres dans sa direction longitudinale,
- un deuxième profilé de cadre (16) avec plusieurs deuxièmes évidements (17) écartés les uns des autres dans sa direction longitudinale,
- un rouleau de convoyage (1) et
- un palier pivotant (18)
le premier profilé de cadre (13) et le deuxième profilé de cadre (16) s'étendant à une certaine distance et
chaque premier évidement (14) étant disposé directement en face d'un deuxième évidement (17) et
un premier évidement (14) du premier profilé de cadre (13) correspondant à une première portion (5) du rouleau de convoyage (1) et un deuxième évidement (17) du deuxième profilé de cadre (13) correspondant à une troisième portion (7) du rouleau de convoyage (1) et
le rouleau de convoyage (1) comprenant un axe (2) et un corps de rouleau (3) logé de manière rotative autour de cet axe (2), dont au moins une première extrémité de l'axe (2) comprenant, dans la partie dépassant du corps de rouleau (3), un premier épaulement (4) entre la première portion (5) située côté rouleau, avec une première section plus grande, et une deuxième portion (6), située en face par rapport au premier épaulement (4), avec une deuxième section plus petite,
- le palier pivotant (18) comprenant un évidement (20) pivotant autour de l'axe de pivotement (19) du palier pivotant (18) et orienté de manière normale par rapport à celui-ci, qui correspond à la deuxième portion (6) de l'axe (2),
**caractérisé en ce que**
- l'évidement (20) est généralement cylindrique,
- la distance (a) entre le premier et le deuxième profilés de cadres (13, 16) est telle que la première portion (5) et la troisième portion (7) de l'axe (2) viennent se loger, lors d'un montage droit du rouleau de convoyage (1), dans des premier et deuxième évidements (14, 17), situés directement l'un en face de l'autre, des profilés de cadres (13, 16) et
- la distance longitudinale (b) entre les premiers ou les deuxièmes évidements (12, 17) est telle que la première portion (5) de l'axe (2) vient se loger, lors d'un montage oblique du rouleau de convoyage (1), dans un premier évidement (14) du premier profilé de cadre (13), la deuxième portion (6) de l'axe (2) vient se loger dans l'évidement cylindrique (20) du palier pivotant (18) monté près du premier évidement (14) à l'extérieur sur le premier profilé de cadre (13) et la troisième portion (7) de l'axe (2) vient se loger dans un deuxième évidement (17), disposé en face de manière oblique par rapport au premier évidement (14), dans le deuxième profilé de cadre (16).

2. Dispositif (15) selon la revendication 1, **caractérisé en ce que** le premier évidement (14) présente une forme hexagonale et la première portion (5) peut être emboîtée par complémentarité de forme dans l'évidement hexagonal (14) du premier profilé de cadre (13) et la deuxième portion (6) est cylindrique.

3. Dispositif (15) selon la revendication 2, **caractérisé en ce que** la première portion (5) présente une forme carrée ou une forme d'étoile à quatre branches.

4. Dispositif (15) selon la revendication 1 ou 2, **caractérisé en ce que** la deuxième portion (6) présente un filetage.

5. Dispositif (15) selon la revendication 1, **caractérisé en ce que** le deuxième évidement (17) présente une forme hexagonale et la troisième portion (7) peut être emboîtée par complémentarité de forme dans le deuxième évidement hexagonal (17) du deuxième profilé de cadre (16).

6. Dispositif (15) selon la revendication 1, **caractérisé en ce que** la troisième portion (7) est logée de manière mobile axialement par rapport à la première et à la deuxième portion (5, 6), plus particulièrement de manière élastique.

7. Dispositif (15) selon la revendication 2 ou 5, **caractérisé en ce que** l'hexagone correspond à une taille de clé de 11 mm.

8. Dispositif (15) selon l'une des revendications 1 à 7, **caractérisé par** une quatrième portion (8) située côté rouleau à proximité de la première portion (5), avec une section circulaire, qui est plus petite que le cercle circonscrit de l'hexagone mentionné.

9. Dispositif (15) selon la revendication 8, **caractérisé en ce que** la quatrième portion présente un diamètre de 12 mm.

10. Installation de convoyage pour le transport d'objets, plus particulièrement d'équipements de manutention, comme des récipients, des tablettes, au moyen de rouleaux de convoyage (1) dans plusieurs portions de convoyage (38, 39), avec
- un premier profilé de cadre (13), qui comprend une nervure verticale profilée (37) avec des premiers évidements (14) disposés successivement dans celle-ci dans le sens de convoyage, pour le logement d'un axe (2) des rouleaux de convoyage (1),
- un deuxième profilé de cadre (16), le deuxième profilé de cadre (16) comprenant une nervure verticale profilée (37) avec des deuxièmes évidements (17) disposés successivement dans celle-ci dans le sens de convoyage, pour le logement d'un axe (2) des rouleaux de convoyage (1),
le premier profilé de cadre (13) et le deuxième profilé de cadre (16) étant conçus de manière identique dans la première portion de convoyage (38) et dans la deuxième portion de convoyage (39) et
le premier profilé de cadre (13) et le deuxième profilé de cadre (16) s'étendant avec une distance (a) parallèlement entre eux et dans le sens de convoyage des objets,
- une première portion de convoyage (38), dans laquelle les rouleaux de convoyage (1) sont disposés, avec leurs axes (2) globalement perpendiculaires à la nervure profilée (37), entre le premier et le deuxième profilés de cadres (13, 16), au moins un des rouleaux de convoyage (1) de la première portion de convoyage (38) étant un rouleau de convoyage (1) motorisé,
- une deuxième portion de convoyage (39), dans laquelle les rouleaux de convoyage (1) sont disposés, avec leurs axes (2) formant un angle par rapport à la nervure profilée (37) entre le premier et le deuxième profilés de cadres (13, 16), au au moins un des rouleaux de convoyage (1) de la deuxième portion de convoyage (39) étant un rouleau de convoyage (1) motorisé,
un premier évidement (14) du premier profilé de cadre (13) correspondant à une première portion (5) du rouleau de convoyage motorisé (1) et un deuxième évidement (17) du deuxième profilé de cadre (13) correspondant à une troisième portion (7) du rouleau de convoyage motorisé (1),
aussi bien le rouleau de convoyage motorisé (1) de la première portion de convoyage (38) que le rouleau de convoyage motorisé (1) de la deuxième portion de convoyage (38) comprenant chacun un axe (2) et un corps de rouleau (3) logé de manière rotative autour de cet axe (2), dont au moins une première extrémité de cet axe (2) présente, dans la partie dépassant du corps de rouleau (3), un premier épaulement (4) entre la première portion (5) située côté rouleau, avec une première section plus grande, et une deuxième portion (6) située en face du premier épaulement (4), avec une deuxième section plus petite,
- au moins un palier pivotant (18) dans la deuxième portion de convoyage (39), qui loge le rouleau de convoyage motorisé (1) au niveau d'une extrémité avec son axe (2), comprenant
un corps de base (23, 24) d'une seule pièce ou en plusieurs pièces et
un plateau pivotant (25) qui est logé de manière rotative au niveau du corps de base (23, 24) dans un logement (40) autour d'un axe de pivotement (19), qui comprend un évidement (20) orienté perpendiculairement par rapport à l'axe de pivotement (19) mentionné et qui comprend des surfaces de guidage (27) perpendiculaires à l'axe de pivotement (19),
le corps de base (23, 24) formant, au-dessus et en dessous du plateau pivotant (25) et s'étendant perpendiculairement par rapport à l'axe de pivotement (19), une première partie de paroi latérale (41) et une deuxième partie de paroi latérale (42), qui délimitent le logement (40), le plateau pivotant (25) étant logé à l'intérieur du logement (40) au niveau de la première partie de paroi latérale (41) et de la deuxième partie de paroi latérale (42) et étant disposé de manière rotative par rapport au corps de base (23, 24) fixe autour de l'axe de pivotement (19) et
l'axe de pivotement (18) étant monté, avec son corps de base (23, 24), par l'intermédiaire d'un dispositif de fixation (22), sur la nervure verticale profilée (37) au moins du premier profilé de cadre (13) et étant positionné par rapport au premier profilé de cadre (13) de façon à ce que l'axe (2) du rouleau de convoyage motorisé (1) traverse aussi bien un des évidements (14) dans la nervure verticale profilée (37) et l'évidement (20) du plateau pivotant (25),
**caractérisé en ce que**
dans la première portion de convoyage (38), dans laquelle les rouleaux de convoyage (1) sont disposés, avec leurs axes (2), globalement perpendiculairement à la nervure profilée (37), entre le premier et le deuxième profilés de cadres (13, 16), la première portion (5) du rouleau de convoyage motorisé (1) est insérée directement dans le premier évidement (14) et la troisième portion (7) du rouleau de convoyage motorisé (1) est insérée directement dans le deuxième évidement (17) et
dans la deuxième portion de convoyage (38), dans laquelle les rouleaux de convoyage (1) sont disposés, avec leurs axes (2), en formant un angle par rapport à la nervure profilée (37), entre le premier et le deuxième profilés de cadres (13, 16), la deuxième portion (6) du rouleau de convoyage motorisé (1) correspond à l'évidement (20) globalement cylindrique dans le plateau pivotant (25) du palier pivotant (18).

11. Installation de convoyage selon la revendication 10, **caractérisée en ce que**
- les surfaces de guidage (27) perpendiculaires à l'axe de pivotement (19) correspondent à des surfaces de guidage (28) du corps de base (23, 24), également perpendiculaires à l'axe de pivotement (19) et
- un couple exercé sur le plateau pivotant (25) autour de l'axe du rouleau de convoyage (1) est absorbé par les surfaces de guidage (27) du plateau pivotant (25), qui se touchent, et les surfaces de guidage (28) du corps de base (23, 24).

12. Installation de convoyage selon la revendication 10 ou 11, **caractérisée en ce que**
- le plateau pivotant (25) comprend au moins un pivot rotatif cylindrique (29) dépassant perpendiculairement de la surface de guidage (27) et
- le corps de base est réalisé en plusieurs pièces, moyennant quoi, dans une première partie (23), est disposé un premier logement (34) pour le logement du pivot (29) mentionné ou, dans une première partie (23), est disposée une première demi-coque (30) et, dans une deuxième partie (24) est disposée une deuxième demi-coque (31) pour le logement du pivot (29) mentionné.

13. Installation de convoyage selon l'une des revendications 10 à 12, **caractérisée en ce que** le plateau pivotant (25) comprend deux pivots (29) du type mentionné, qui sont logés dans deux logements (34, 35) ou dans deux demi-coques (30, 31).

14. Installation de convoyage selon l'une des revendications 10 à 13, **caractérisée en ce que** le plateau pivotant (25) présente une forme essentiellement parallélépipédique.
